(19) Europäisches Patentamt
European Patent Office
Office européen des brevets

(11) **EP 1 816 331 A2**

(12) **EUROPÄISCHE PATENTANMELDUNG**

(43) Veröffentlichungstag:
08.08.2007 **Patentblatt 2007/32**

(51) Int Cl.:
*F02D 41/00* (2006.01)   *F02D 41/18* (2006.01)
*F02D 41/24* (2006.01)   *F02B 37/12* (2006.01)

(21) Anmeldenummer: **07100028.5**

(22) Anmeldetag: **02.01.2007**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **03.02.2006 DE 102006005422**

(71) Anmelder: **ROBERT BOSCH GMBH**
**70442 Stuttgart (DE)**

(72) Erfinder: **Schwarzmann, Dieter**
**74081, Heilbronn (DE)**

(54) **Verfahren und Regeleinrichtung zum Betreiben einer Brennkraftmaschine**

(57) Es werden ein Verfahren, eine Steuer- und/oder Regeleinrichtung (15), ein Computerprogramm-Produkt mit Programmcode und ein Computerprogramm mit Programmcode vorgeschlagen, die eine verbesserte Annäherung des Verlaufs des Massenstroms über dem Druckverhältnis eines Verdichters (5) der Brennkraftmaschine (1) an Messpunkte ermöglichen. Der Verdichter (5) ist in einer Luftzufuhr (10) der Brennkraftmaschine (1) angeordnet. Für verschiedene Druckverhältnisse über dem Verdichter (5) wird der Massenstrom durch den Verdichter (5) gemessen. Aus den so ermittelten Messpunkten wird ein Verlauf des Massenstroms über dem Druckverhältnis extrapoliert. Der Verlauf des Massenstroms über dem Druckverhältnis wird unter Verwendung einer Tangensfunktion angenähert.

Fig. 1

EP 1 816 331 A2

**Beschreibung**

Stand der Technik

Die Erfindung geht von einem Verfahren zum Betreiben einer Brennkraftmaschine, von einem Computerprogramm-Produkt, einem Computerprogramm und von einer Steuer- und/oder Regeleinrichtung zum Betreiben einer Brennkraftmaschine nach der Gattung der unabhängigen Ansprüche aus.

Es sind bereits Verfahren und Steuer- und/oder Regeleinrichtungen zum Betreiben einer Brennkraftmaschine bekannt, wobei die Brennkraftmaschine einen Verdichter in einer Luftzufuhr der Brennkraftmaschine umfasst und wobei für verschiedene Druckverhältnisse über dem Verdichter der Massenstrom durch den Verdichter gemessen wird. Aus den so ermittelten Messpunkten wird ein Verlauf des Massenstroms über dem Druckverhältnis extrapoliert. Dies ist beispielsweise aus der Veröffentlichung "P. Moraal and I. Kolmanovsky. Turbo charger modelling for automotive control applications. Technical Report 1999-01-0908, SAE, 1999" bekannt. Dabei wird der Verlauf des Massenstroms über dem Druckverhältnis beispielsweise unter Verwendung von Hyperbeln angenähert.

Dabei ergibt sich das Problem, dass eine Hyperbel zwei Äste hat, von denen nur einer gültig ist. Aufwendige Vergleichsalgorithmen sind notwendig, um nicht einen falschen Wert für den Massenstrom zu liefern.

Vorteile der Erfindung

Offenbarung der Erfindung

Das erfindungsgemäße Verfahren, das erfindungsgemäße Computerprogramm-Produkt, das erfindungsgemäße Computerprogramm und die erfindungsgemäße Steuer- und/oder Regeleinrichtung zum Betreiben einer Brennkraftmaschine mit den Merkmalen der unabhängigen Ansprüche haben demgegenüber den Vorteil, dass der Verlauf des Massenstroms über dem Druckverhältnis unter Verwendung einer Tangensfunktion angenähert wird. Eine Tangensfunktion hat den Vorteil, dass sie nur einen Ast aufweist, so dass Fehlinterpretationen bei der Bestimmung des Massenstroms ausgeschlossen sind. Dabei weist die Tangensfunktion auch eine ausreichende Genauigkeit für die Extrapolation auf.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn die Tangensfunktion mindestens einen Parameter umfasst und wenn der Wert des mindestens einen Parameters abhängig von den Messpunkten gewählt wird, derart, dass der extrapolierte Verlauf von den Messpunkten geringst möglich abweicht. Auf diese Weise lässt sich die Tangensfunktion bei geeigneter Wahl des mindestens einen Parameters optimal an die Messpunkte anpassen, so dass davon auszugehen ist, dass der extrapolierte Verlauf des Massenstroms über dem Druckverhältnis den tatsächlichen Verlauf des Massenstroms über dem Druckverhältnis optimal annähert.

Die Genauigkeit der Extrapolation kann auch dadurch gesteigert werden, dass für verschiedene Drehzahlen des Verdichters unterschiedliche Verläufe des Massenstroms über dem Druckverhältnis extrapoliert werden. Auf diese Weise wird der Einfluss der Drehzahl des Verdichters auf den Verlauf des Massenstroms über dem Druckverhältnis berücksichtigt.

Vorteilhaft ist es dabei, wenn die Tangensfunktion mindestens einen Parameter umfasst, der abhängig von der Drehzahl des Verdichters gewählt wird. Auf diese Weise lässt sich der Einfluss der Drehzahl des Verdichters auf den Verlauf des Massenstroms über dem Druckverhältnis besonders einfach berücksichtigen.

Dies beispielsweise dadurch, dass das Argument der Tagensfunktion einen Parameter umfasst, der drehzahlabhängig gewählt wird und/oder dass ein einen Offset der Tagensfunktion darstellender Parameter drehzahlabhängig gewählt wird.

Ein weiterer Vorteil ergibt sich dadurch, dass für den drehzahlabhängigen Parameter ein funktionaler Zusammenhang, insbesondere eine Tangenshyperbolicus-Funktion, deren Argument die Drehzahl des Verdichters (5) umfasst, gewählt wird. Auf diese Weise lässt sich der drehzahlabhängige Parameter mithilfe des funktionalen Zusammenhangs einfacher und weniger aufwändig bestimmen, ohne dass eine direkte Ermittlung des Parameters aus den Messpunkten von Massenstrom und Druckverhältnis erforderlich ist.

Dabei hat sich herausgestellt, dass der Verlauf des Parameters im Argument der Tagensfunktion abhängig von der Drehzahl am besten durch eine Tangenshyperbolikus-Funktion angenähert werden kann, deren Argument die Drehzahl des Verdichters umfasst.

Vorteilhaft ist außerdem, wenn der funktionale Zusammenhang mindestens einen Parameter umfasst und wenn der Wert des mindestens einen Parameters abhängig von den Messpunkten gewählt wird, derart, dass der extrapolierte Verlauf des Massenstroms über dem Druckverhältnis von den Messpunkten geringst möglich abweicht. Dies ist dann der Fall, wenn der mindestens eine Parameter des funktionalen Zusammenhangs, insbesondere der Tangenshyperbolikus-Funktion, so gewählt wird, dass eine ermittelte Abhängigkeit des Parameters im Argument der Tangensfunktion von der Drehzahl des Verdichters möglichst optimal angenähert wird.

Für den Offset hat sich als vorteilhaft erwiesen, dass ein funktionaler Zusammenhang, insbesondere eine Polynomfunktion, bei der die Drehzahl des Verdichters (5) quadratisch in den Offset eingeht, gewählt wird. Auf diese Weise lässt sich die Drehzahlabhängigkeit des den Offset repräsentierenden Parameters der Tangensfunktion optimal annähern.

Dazu kann es vorgesehen sein, dass der Offset mindestens einen, insbesondere nicht drehzahlabhängigen, Parameter umfasst und der Wert des mindestens einen, insbesondere nicht drehzahlabhängigen, Parameters abhängig von den Messpunkten gewählt wird, derart, dass der extrapolierte Verlauf des Massenstroms über dem Druckverhältnis von den Messpunkten geringst möglich abweicht. Dies ist dann der Fall, wenn der mindestens eine Parameter des Offsets so gewählt wird, dass die ermittelte Abhängigkeit des Offsets von der Drehzahl möglichst optimal angenähert wird.

Zeichnung

Ein Ausführungsbeispiel der Erfindung ist in der Zeichnung dargestellt und in der nachfolgenden Beschreibung näher erläutert. Es zeigen:

Figur 1     ein Blockschaltbild einer Brennkraftmaschine,

Figur 2     ein Funktionsdiagramm zur Erläuterung der Funktionsweise des erfindungsgemäßen Verfahrens und der erfindungsgemäßen Vorrichtung

Figur 3     einen Ablaufplan für einen beispielhaften Ablauf des erfindungsgemäßen Verfahrens und

Figur 4     ein Diagramm des Druckverhältnisses über einem Verdichter abhängig vom Massenstrom durch den Verdichter und abhängig von einer Drehzahl des Verdichters.

Beschreibung der Ausführungsbeispiele

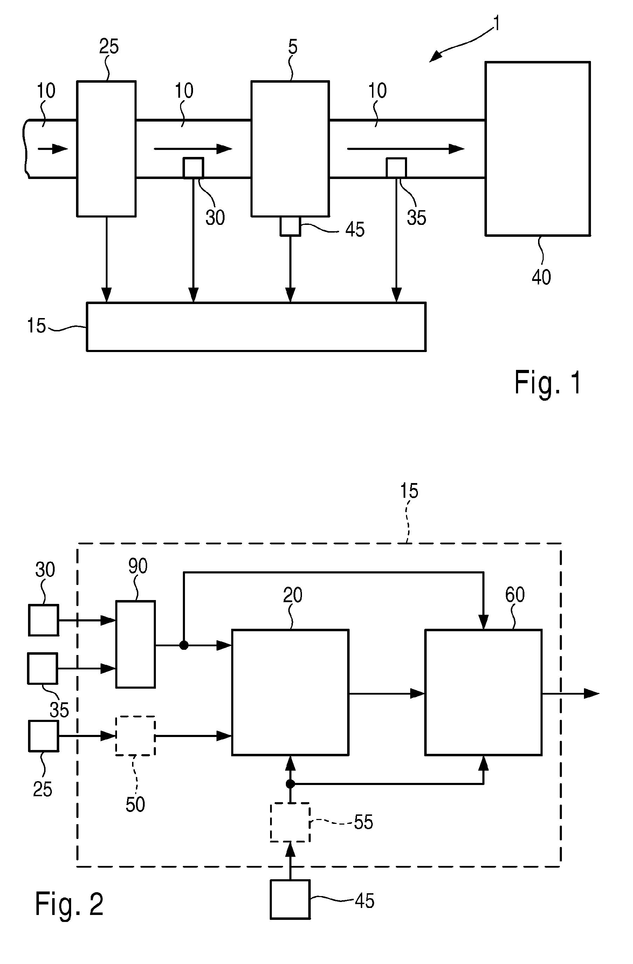

In Figur 1 kennzeichnet 1 eine Brennkraftmaschine, die beispielsweise ein Fahrzeug antreibt. Die Brennkraftmaschine 1 kann beispielsweise als Ottomotor oder als Dieselmotor ausgebildet sein. Im Folgenden wird beispielhaft angenommen, dass die Brennkraftmaschine 1 als Dieselmotor ausgebildet ist. Die Brennkraftmaschine 1 umfasst einen Brennraum 40, der beispielsweise durch einen oder mehrere Zylinder gebildet wird und dem über eine Luftzufuhr 10 Frischluft zugeführt wird. Die Strömungsrichtung der Frischluft in der Luftzufuhr 10 ist in Figur 1 durch Pfeile gekennzeichnet. Dabei ist in der Luftzufuhr 10 ein Verdichter 5 angeordnet, der die dem Brennraum 40 zugeführte Frischluft verdichtet und zu diesem Zweck beispielsweise von einer Turbine in einem nicht dargestellten Abgasstrang der Brennkraftmaschine 1 oder von einer ebenfalls nicht dargestellten Kurbelwelle der Brennkraftmaschine 1 angetrieben wird. Eine Drehzahl des Verdichters 5 wird von einem Drehzahlsensor 45 in dem Fachmann bekannter Weise ermittelt und an eine Motorsteuerung 15 weitergeleitet. Alternativ kann die Drehzahl des Verdichters in dem Fachmann bekannter Weise auch aus anderen Betriebsgrößen der Brennkraftmaschine 1 modelliert werden und der modellierte Wert der Motorsteuerung 15 zur Verfügung gestellt werden. Stromauf des Verdichters 5 ist in der Luftzufuhr 10 ein erster Drucksensor 30 angeordnet, der den Druck stromauf des Verdichters 5 in der Luftzufuhr 10 misst und das Messergebnis an die Motorsteuerung 15 weiterleitet. Alternativ kann der Druck stromauf des Verdichters 5 in der Luftzufuhr 10 auch in dem Fachmann bekannter Weise aus anderen Betriebsgrößen der Brennkraftmaschine 1 modelliert und der modellierte Wert der Motorsteuerung 15 zur Verfügung gestellt werden. Stromab des Verdichters 5 ist in der Luftzufuhr 10 ein zweiter Drucksensor 35 angeordnet, der den Druck stromab des Verdichters 5 in der Luftzufuhr 10 misst und das Messergebnis an die Motorsteuerung 15 weiterleitet. Alternativ kann der Druck stromab des Verdichters 5 in der Luftzufuhr 10 auch in dem Fachmann bekannter Weise aus anderen Betriebsgrößen der Brennkraftmaschine 1 modelliert werden. Der modellierte Wert für den Druck stromab des Verdichters 5 in der Luftzufuhr 10 wird dann der Motorsteuerung 15 zur Verfügung gestellt. Stromauf des ersten Drucksensors 30 ist in der Luftzufuhr 10 ein Luftmassenmesser 25, beispielsweise in Form eines Heißfilmluftmassenmessers oder eines Ultraschallluftmassenmessers angeordnet, der den über die Luftzufuhr 10 und den Verdichter 5 dem Brennraum 40 zugeführten Luftmassenstrom misst und das Messergebnis an die Motorsteuerung 15 weiterleitet. Alternativ kann der Luftmassenstrom auch in dem Fachmann bekannter Weise aus anderen Betriebsgrößen der Brennkraftmaschine 1 modelliert und der modellierte Wert der Motorsteuerung 15 zur Verfügung gestellt werden. Bei dem ermittelten Luftmassenstrom handelt es sich um den Luftmassenstrom, der durch den Verdichter 5 fließt.

Die Zufuhr von Kraftstoff in den Brennraum 40 entweder über die Luftzufuhr 10 oder direkt in die Zylinder und damit direkt in den Brennraum 40 ist in Figur 1 nicht dargestellt genauso wenig wie der Abgasstrang und kann in dem Fachmann bekannter Weise realisiert sein.

In Figur 2 ist ein Funktionsdiagramm der Motorsteuerung 15 dargestellt, das software- und/oder hardwaremäßig implementiert sein kann. Dabei kann die Motorsteuerung 15 neben der nachfolgend beschriebenen erfindungsgemäßen Funktionalität noch weitere dem Fachmann bekannte Funktionalitäten zur Steuerung der Brennkraftmaschine 1 aufweisen, wie beispielsweise zur Einstellung einer einzuspritzenden Kraftstoffmenge abhängig von einem Betätigungsgrad eines Fahrpedals.

Als erfindungsgemäße Steuer- und/oder Regeleinrichtung umfasst die Motorsteuerung 15 eine Extrapolationseinheit 20, der zum einen das Ausgangssignal eines Divisionsgliedes 90 und zum anderen das Signal des Luftmassenmessers 25 zugeführt wird. Ferner ist der Extrapolationseinheit 20 optional das Signal des Drehzahlsensors 45 zugeführt. Dem Divisionsglied 90 ist vom ersten Drucksensor 30 der Druck stromauf des Verdichters 5 in der Luftzufuhr 10 und vom zweiten Drucksensor 35 der Druck stromab des Verdichters 5 in der Luftzufuhr 10 jeweils als Messsignal zugeführt. Das Divisionsglied 90 dividiert den Druck stromab des Verdichters 5 durch den Druck stromauf des Verdichters 5 und bildet somit das Druckverhältnis über dem Verdichter 5, das auch als Verdichterdruckverhältnis bezeichnet wird, und gibt ein entsprechendes das Verdichterdruckverhältnis repräsentierendes Signal an die Extrapolationseinheit 20 ab. Die genannten Größen des Verdichterdruckverhältnisses und des zugeordneten gemessenen Luftmassenstroms, der auch den Luftmassenstrom durch den Verdichter 5 darstellt, werden für verschiedene Betriebspunkte der Brennkraftmaschine 1 ermittelt. Dabei wird für verschiedene vom Verdichter 5 eingestellte und gemessene Verdichterdruckverhältnisse jeweils der zugeordnete Luftmassenstrom gemessen und die so ermittelten Messpunkte aus jeweiligem Druckverhältnis und zugeordnetem Luftmassenstrom in der Extrapolationseinheit 20 oder einem dieser zugeordneten Speicher abgelegt.

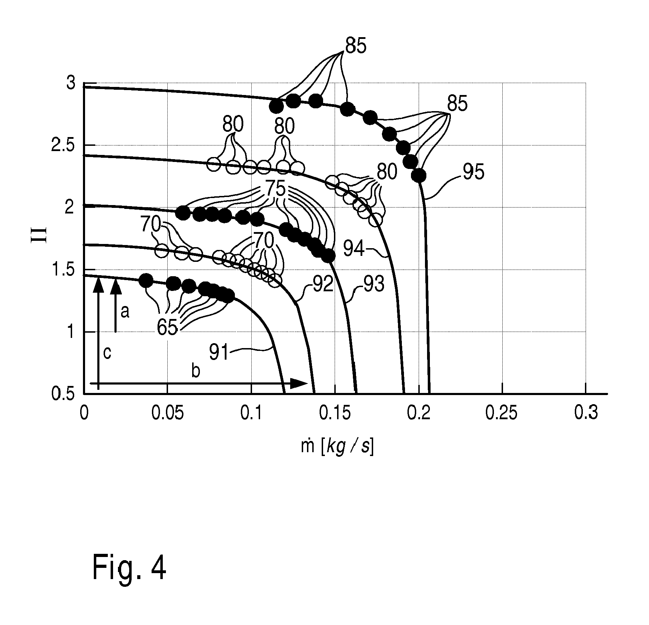

In Figur 4 ist ein Diagramm des Verdichterdruckverhältnisses $\Pi$ über dem Luftmassenstrom $\dot{m}$ in kg/s dargestellt. Dabei werden beispielsweise für eine Drehzahl des Verdichters 5 in Höhe von 85000 Umdrehungen pro Minute die Messpunkte 65 ermittelt. Zu diesem Zweck kann die Drehzahl des Verdichters 5 während den Messungen des Verdichterdruckverhältnisses und des Luftmassenstroms konstant gehalten und vom Drehzahlsensor 45 erfasst und der Extrapolationseinheit 20 zugeführt werden, die die Messpunkte in Zuordnung zur eingestellten Verdichterdrehzahl abspeichert. Die Extrapolationseinheit 20 extrapoliert nun aus den sieben Messpunkten 65 bei der Verdichterdrehzahl von 85000 Umdrehungen pro Minute gemäß Figur 4 einen ersten kontinuierlichen Verlauf 91 des Luftmassenstroms $\dot{m}$ über dem Verdichterdruckverhältnis $\Pi$, der bestmöglich an die Messpunkte 65 angenähert sein soll. Für diese Extrapolation verwendet die Extrapolationseinheit 20 eine Tangensfunktion gemäß folgender Gleichung:

$$\dot{m} = a * \tan\left(\frac{-\Pi\pi}{2*b}\right) + c \qquad\qquad (1).$$

In Gleichung (1) stellen a, b, c Parameter dar, deren Wert von der Extrapolationseinheit 20 beispielsweise durch ein dem Fachmann bekanntes numerisches Optimierungsverfahren so gewählt wird, dass der erste extrapolierte kontinuierliche Verlauf 91 gemäß der Tangensfunktion geringst möglich von den Messpunkten 65 abweicht.

Das beschriebene Vorgehen kann von der Extrapolationseinheit 20 für verschiedene Verdichterdrehzahlen wiederholt werden. So zeigt Figur 4 Messpunkte 70 für eine Verdichterdrehzahl von 105000 Umdrehungen pro Minute, für die die Extrapolationseinheit 20 die Parameter a, b, c derart ermittelt, dass die Messpunkte geringst möglich von einem zweiten extrapolierten kontinuierlichen Verlauf 92 des Luftmassenstrom $\dot{m}$ über dem Verdichterdruckverhältnis $\Pi$ abweichen, wobei auch der zweite Verlauf 92 gemäß Gleichung (1) ermittelt wurde.

Entsprechend werden der Extrapolationseinheit 20 Messpunkte 75 bei einer Verdichterdrehzahl von 125000 Umdrehungen pro Minute zugeführt, für die die Parameter a, b, c von der Extrapolationseinheit 20 so gewählt werden dass die Messpunkte 75 von einem dritten extrapolierten kontinuierlichen Verlauf 93 gemäß Gleichung (1) geringst möglich abweichen.

Bei einer Verdichterdrehzahl von 145000 Umdrehungen pro Minute werden die Messpunkte 80 ermittelt, für die die Extrapolationseinheit 20 die Parameter a, b, c so mittels numerischer Optimierung bestimmt, dass die Messpunkte 80 geringst möglich von einem vierten extrapolierten kontinuierlichen Verlauf 94 gemäß Gleichung (1) abweichen.

Ferner werden bei einer Verdichterdrehzahl von 165000 Umdrehungen pro Minute die Messpunkte 85 ermittelt, für die die Extrapolationseinheit 20 die Parameter a, b, c derart ermittelt, dass der sich ergebende extrapolierte kontinuierliche fünfte Verlauf 95 gemäß Gleichung (1) geringst möglich von den Messpunkten 85 abweicht.

Die geringst mögliche Abweichung der Messpunkte vom zugeordneten extrapolierten Verlauf kann dabei beispielsweise in der Extrapolationseinheit derart realisiert werden, dass die Summe der Quadrate der Abweichungen der Messpunkte von dem extrapolierten kontinuierlichen zugeordneten Verlauf minimal ist. Alternativ können andere dem Fachmann bekannte Optimierungsverfahren verwendet werden.

Gemäß einer vorteilhaften Weiterbildung der Erfindung kann es vorgesehen sein, dass die Tangensfunktion gemäß Gleichung (1) mindestens einen Parameter umfasst, der abhängig von der Drehzahl des Verdichters 5 vorgegeben oder gewählt wird. So kann sich bei der Ermittlung der Verläufe 91, 92, ..., 95 herausstellen, dass einer oder mehrere der Parameter a, b, c für verschiedene Verdichterdrehzahlen verschiedene Werte annimmt. Dies kann beispielsweise für den Parameter b im Argument der Tangensfunktion der Fall sein. So kann für die verschiedenen Messpunkte des Parameters b über der Verdichterdrehzahl wiederum ein funktionaler Zusammenhang gesucht werden, der den Verlauf des Parameters b über der Verdichterdrehzahl annähert. Ein solch funktionaler Zusammenhang ist beispielsweise eine Tangenshyperbolikus-Funktion gemäß folgender Gleichung:

$$b\,(n_V) = b_1 \tanh\,(b_2 n_V + b_3) + b_4 \qquad\qquad (2).$$

$n_V$ ist die Verdichterdrehzahl und $b_1$, $b_2$, $b_3$, $b_4$ sind Parameter, die beispielsweise von der Extrapolationseinheit 20 derart gewählt werden, dass der extrapolierte Verlauf des Parameters b über der Verdichterdrehzahl $n_V$ von den Messpunkten für den Parameter b geringst möglich abweicht. Auch für diesen Zweck kann wiederum eine numerische Optimierungsmethode wie z. B. das Minimum der Summe der quadratischen Abweichungen der Messpunkte vom extrapolierten Verlauf Anwendung finden. Mit den so bestimmten Parametern $b_1$, $b_2$, $b_3$ und $b_4$ lässt sich somit für jede beliebige Verdichterdrehzahl $n_V$ mit Hilfe des Zusammenhangs nach Gleichung (2) das Argument der Tangensfunktion in Gleichung (1) direkt bestimmen, ohne das der Parameter b selbst in der zuvor beschriebenen Weise durch numerisches Optimierungsverfahren aus den Messpunkten für das Druckverhältnis und den zugeordneten Luftmassenstrom ermittelt werden muss.

Durch den Zusammenhang nach Gleichung (2) für den Parameter b und die beschriebene Ermittlung der Parameter $b_1$, $b_2$, $b_3$ und $b_4$ wird somit ebenfalls sichergestellt, dass der extrapolierte Verlauf des Massenstroms $\dot{m}$ über dem Verdichterdruckverhältnis $\Pi$ von den zugeordneten Messpunkten gemäß Figur 4 für jede Verdichterdrehzahl $n_V$ geringst möglich abweicht.

Weithin kann das beschriebene Verfahren auch für den Offsetparameter c in Gleichung (1) durchgeführt werden. Dabei werden die Messpunkte für den Parameter c über der Verdichterdrehzahl $n_V$ aufgetragen und der Verlauf des Parameters c über der Verdichterdrehzahl $n_V$ durch einen geeigneten funktionalen Zusammenhang angenähert. Dabei hat sich das folgende Polynom als geeignet herausgestellt:

$$c\,(n_V) = c_1 n_V^{\,2} + 1 \qquad\qquad (3).$$

Auf diese Weise kann auch der Verdichterdrehzahlabhängigkeit des Offsetparameters c in der Gleichung (1) Rechnung getragen werden. Der Parameter $c_1$ wird dann von der Extrapolationseinheit 20 derart gewählt, dass der extrapolierte kontinuierliche Verlauf des Parameters c über der Verdichterdrehzahl $n_V$ geringst möglich von den Messpunkten für den Parameter c über der Verdichterdrehzahl $n_V$ abweicht. Dazu kann beispielsweise wiederum eine numerische Optimierungsmethode, beispielsweise des Minimums der Summe der quadratischen Abweichungen der Messpunkte vom zugeordneten extrapolierten Verlauf gewählt werden. Somit kann der Parameter c in Gleichung (1) direkt aus dem funktionalen Zusammenhang gemäß Gleichung (3) ermittelt werden, ohne dass der Parameter c selbst in der zuvor beschriebenen Weise beispielsweise durch numerische Optimierung aus den Messpunkten für Luftmassenstrom und zugeordnetes Druckverhältnis ermittelt werden muss. Ferner wird durch den funktionalen Zusammenhang nach Gleichung (3) und die beschriebene Ermittlung des Parameters $C_1$ sichergestellt, dass der extrapolierte kontinuierliche Verlauf des Massenstroms $\dot{m}$ über dem Verdichterdruckverhältnis $\Pi$ von den zugeordneten Messpunkten gemäß Figur 4 für jede Verdichterdrehzahl $n_V$ geringst möglich abweicht.

In entsprechender Weise kann auch der Parameter a auf Verdichterdrehzahlabhängigkeit geprüft werden und ggf. ein funktionaler Zusammenhang zwischen dem Parameter a und der Verdichterdrehzahl ermittelt werden. Alternativ kann natürlich der Parameter a in der beschriebenen Weise selbst beispielsweise durch numerische Optimierung (z.B. Minimum der Summe der quadratischen Abweichungen) aus den Messpunkten für Luftmassenstrom und zugeordnetes Druckverhältnis eingestellt werden.

In Figur 4 ist der Einfluss der Parameter a, b, c auf den extrapolierten kontinuierlichen Verlauf des Massenstroms $\dot{m}$ über dem Verdichterdruckverhältnis $\Pi$ dargestellt. Mit Zunahme des Wertes für den Parameter a bzw. für den Parameter c steigt bei gleichem Luftmassenstrom $\dot{m}$ das Verdichterdruckverhältnis $\Pi$ an, wohingegen mit zunehmendem Parameter b bei gleich bleibendem Verdichterdruckverhältnis $\Pi$ der zugeordnete Luftmassenstrom $\dot{m}$ ansteigt.

Die durch die Extrapolationseinheit 20 in der beschriebenen Weise gefundenen funktionalen Zusammenhänge

zwischen dem Luftmassenstrom $\dot{m}$ und dem Verdichterdruckverhältnis $\Pi$ abhängig von der Verdichterdrehzahl $n_V$, wie sie beispielhaft in Figur 4 anhand der fünf Verläufe 91, 92, ..., 95 dargestellt sind, werden in einem Kennfeldspeicher 60 der Motorsteuerung 15 abgelegt. Dabei ist es vorteilhaft, wenn für jede verwendete Verdichterdrehzahl $n_V$ ein entsprechender extrapolierter kontinuierlicher Verlauf des Verdichterdruckverhältnisses $\Pi$ über dem Luftmassenstrom $\dot{m}$ von der Extrapolationseinheit 20 erzeugt und im Kennfeldspeicher 60 abgelegt wird. Im Betrieb der Brennkraftmaschine 1 kann dann für Steuerungs- oder Diagnosefunktionen dem Kennfeldspeicher 60 als Eingangsgröße das Verdichterdruckverhältnis am Ausgang des Divisionsgliedes 90 sowie die Verdichterdrehzahl $n_V$ vom Drehzahlsensor 45 zugeführt werden, um am Ausgang des Kennfeldspeichers 60 den zugeordneten Luftmassenstrom $\dot{m}$ zu erhalten. Alternativ und in nicht dargestellter Weise kann aber auch dem Kennfeldspeicher 60 als Eingangsgröße der Luftmassenstrom vom Luftmassenmesser 25 und die Verdichterdrehzahl vom Drehzahlsensor 45 zugeführt werden, so dass der Kennfeldspeicher 60 als Ausgangsgröße das zugeordnete Verdichterdruckverhältnis gemäß den Kennlinien nach Figur 4 ermittelt und ausgibt. Weiterhin alternativ können dem Kennfeldspeicher 60 als Eingangsgrößen auch das Verdichterdruckverhältnis am Ausgang des Divisionsgliedes 90 sowie der Luftmassenstrom vom Luftmassenmesser 25 zugeführt werden, wobei der Kennfeldspeicher 60 dann am Ausgang die zugeordnete Verdichterdrehzahl $n_V$ gemäß den Kennlinien nach Figur 4 ausgibt.

Es kann weiterhin optional vorgesehen sein, dass der vom Luftmassenmesser 25 gemessene Luftmassenstrom vor seiner Zuführung zur Extrapolationseinheit 20 in einer ersten Normierungseinheit 50 normiert wird, beispielsweise gemäß folgender Gleichung:

$$\dot{m}_{\text{norm}} = \dot{m}_{\text{mess}} * \sqrt{\frac{T_{in}}{T_{ref}}} * \frac{p_{ref}}{p_{in}} \qquad (4).$$

Dabei ist $\dot{m}_{\text{norm}}$ der normierte Luftmassenstrom am Ausgang der ersten Normierungseinheit 50 und $\dot{m}_{\text{mess}}$ der vom Luftmassenmesser 25 gemessene Luftmassenstrom, der der ersten Normierungseinheit 50 eingangsseitig zugeführt wird. $T_{in}$ ist die von einem in Figur 1 nicht dargestellten Temperatursensor stromauf des Verdichters 5 in der Luftzufuhr 10 gemessene Temperatur der zugeführten Frischluft. $P_{in}$ ist der vom ersten Drucksensor 30 gemessene Druck stromauf des Verdichters 5. $T_{ref}$ ist eine Referenztemperatur und $P_{ref}$ ein Referenzdruck, auf die der gemessene Luftmassenstrom $\dot{m}_{\text{mess}}$ normiert wird. In diesem Fall arbeitet die Extrapolationseinheit 20 mit dem Wert von $\dot{m}_{\text{norm}}$. Eine Rückrechnung auf den tatsächlich gemessenen Luftmassenstrom $\dot{m}_{\text{mess}}$ ist dann nur mit Hilfe von Gleichung (4) möglich.

In entsprechender Weise kann auch die Verdichterdrehzahl $n_V$ normiert werden, die vom Drehzahlsensor 45 gemessen wird. Für diese Normierung gilt folgender Zusammenhang:

$$n_{V\text{norm}} = n_{V\text{mess}} * \sqrt{\frac{T_{ref}}{T_{in}}} \qquad (5).$$

Dabei ist $n_{V\text{norm}}$ die normierte Verdichterdrehzahl und $n_{V\text{mess}}$ die vom Drehzahlsensor 45 gemessene Verdichterdrehzahl. Die beschriebene Normierung wird dabei ebenfalls optional in einer zweiten Normierungseinheit 55 durchgeführt, der das Messsignal des Drehzahlsensors 45 eingangsseitig zugeführt ist. Die Extrapolationseinheit 20 arbeitet dann mit der normierten Verdichterdrehzahl $n_{V\text{norm}}$, die über Gleichung (5) wieder in die gemessene Verdichterdrehzahl $n_{V\text{mess}}$ rückgerechnet werden kann. Auch diese Normierung ist auf die Temperatur stromauf des Verdichters 5 in der Luftzufuhr 10 bezogen. Somit sind dann auch die Kennlinien im Kennlinienspeicher 60 bei dieser optionalen Weiterbildung der Erfindung auf die normierten Werte des Luftmassenstroms und/oder der Verdichterdrehzahl bezogen. Dabei kann es auch vorgesehen sein, dass entweder nur der Luftmassenstrom oder nur die Verdichterdrehzahl oder sowohl der Luftmassenstrom als auch die Verdichterdrehzahl in der beschriebenen Weise normiert wurden.

Die erste Normierungseinheit 50 und die zweite Normierungseinheit 55 können dabei optional in der Motorsteuerung 15 implementiert sein.

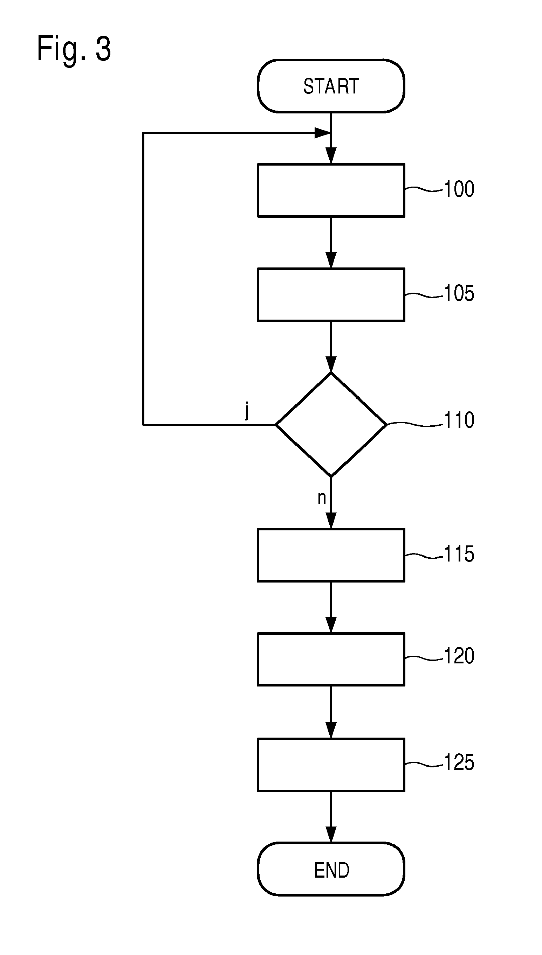

In Figur 3 ist ein Ablaufplan für einen beispielhaften Ablauf des erfindungsgemäßen Verfahrens dargestellt.

Nach dem Start des Programms liest die Extrapolationseinheit 20 bei einem Programmpunkt 100 die Messpunkte für den Luftmassenstrom $\dot{m}$ und das Verdichterdruckverhältnis $\Pi$ bei einer festen Verdichterdrehzahl $n_V$ ein. Anschließend wird zu einem Programmpunkt 105 verzweigt.

Bei Programmpunkt 105 bestimmt die Extrapolationseinheit 20 gemäß der beschriebenen numerischen Optimierung zur Extrapolation des Verlaufs des Luftmassenstroms über dem Verdichterdruckverhältnis die Parameter a, b und c der Tangensfunktion nach Gleichung (1) bei der eingestellten Verdichterdrehzahl $n_V$ und speichert diese Parameter in Zuordnung zu der eingestellten Verdichterdrehzahl $n_V$ ab. Anschließend wird zu einem Programmpunkt 110 verzweigt.

Bei Programmpunkt 110 prüft die Extrapolationseinheit 20, ob eine weitere Verdichterdrehzahl $n_V$ betrachtet werden soll. Ist dies der Fall, so wird zu Programmpunkt 100 zurück verzweigt und der beschriebene Ablauf für eine weitere Verdichterdrehzahl wiederholt. Andernfalls wird zu einem Programmpunkt 115 verzweigt.

Bei Programmpunkt 115 bestimmt die Extrapolationseinheit 20 die Parameter $b_1$, $b_2$, $b_3$, $b_4$ für die Tangenshyperbolicusfunktion nach Gleichung (2) ebenfalls in der beschriebenen Weise, beispielsweise durch numerische Optimierung zur Extrapolation des Verlaufs des Parameter b aus Gleichung (1) über der Verdichterdrehzahl $n_V$ und speichert die Parameter $b_1$, $b_2$, $b_3$, $b_4$ ab. Anschließend wird zu einem Programmpunkt 120 verzweigt.

Bei Programmpunkt 120 bestimmt die Extrapolationseinheit 20 den Parameter $C_1$ in der beschriebenen Weise, beispielsweise ebenfalls durch numerische Optimierung zur Extrapolation des Verlaufs des Parameters c aus Gleichung (1) über der Verdichterdrehzahl $n_V$ und speichert den Parameter $c_1$ ab. Anschließend wird zu einem Programmpunkt 125 verzweigt.

Bei Programmpunkt 125 ermittelt die Extrapolationseinheit 20 aus den ermittelten Parametern a, $b_1$, $b_2$, $b_3$, $b_4$, $c_1$ und den funktionalen Zusammenhängen gemäß den Gleichungen (1), (2), (3) die extrapolierten kontinuierlichen Verläufe und speichert sie als Kennlinien beispielsweise gemäß Figur 4 im Kennlinienspeicher 60 ab. Anschließend wird das Programm verlassen.

Mit dem auf diese Weise gewonnenen Modell des Verdichters 5 hinsichtlich des Verdichterdruckverhältnisses , des Luftmassenstroms $\dot{m}$ durch den Verdichter 5 und der Verdichterdrehzahl $n_V$ lassen sich präzise Simulationen aufgeladener Motoren sowie wie beschrieben Steuerungs- und/oder Diagnoseprozesse der Brennkraftmaschine 1 durchführen. Das Modell eignet sich dabei besonders auch für den Betrieb mit mehrstufig aufgeladenen Brennkraftmaschinen, bei denen mehrere Verdichter in der Luftzufuhr 10 zum Einsatz kommen. In bestimmten Betriebsbereichen wird dabei einer der Verdichter in Sättigung betrieben, das heißt seine Stopfgrenze ist erreicht und das Gas bewegt sich mit Schallgeschwindigkeit durch den Verdichter. Das beschriebene Modell liefert dabei auch für diese Randbereiche des Verdichterbetriebs gültige Zusammenhänge zwischen Luftmassenstrom durch den Verdichter, Verdichterdruckverhältnis und Verdichterdrehzahl. Dies gilt natürlich auch bei Verwendung nur eines einzigen Verdichters wie in Figur 1 dargestellt, der in einem Randbereich, beispielsweise an seiner Stopfgrenze betrieben wird.

Das erfindungsgemäße Verfahren wie es beispielsweise im Ablaufplan nach Figur 3 beschrieben ist, kann in Form eines Computerprogramms mit Programmcode in einem Computer der Motorsteuerung 15 bzw. der Extrapolationseinheit 20, beispielsweise in einem Mikrorechner, ausgeführt werden. Dabei kann das Computerprogramm als Programmcode auch auf einem maschinenlesbaren Träger gespeichert sein, der in der Motorsteuerung 15 installiert oder dieser über ein Laufwerk zuführbar ist, wobei der maschinenlesbare Träger mit dem Programmcode zur Durchführung des erfindungsgemäßen Verfahrens ein Computerprogramm-Produkt darstellt, das auf dem Computer der Motorsteuerung 15 bzw. der Extrapolationseinheit 20 ausgeführt wird.

**Patentansprüche**

1. Verfahren zum Betreiben einer Brennkraftmaschine (1) mit einem Verdichter (5) in einer Luftzufuhr (10) der Brennkraftmaschine (1), wobei für verschiedene Druckverhältnisse über dem Verdichter (5) der Massenstrom durch den Verdichter (5) gemessen wird und wobei aus den so ermittelten Messpunkten ein Verlauf des Massenstroms über dem Druckverhältnis extrapoliert wird, **dadurch gekennzeichnet, dass** der Verlauf des Massenstroms über dem Druckverhältnis unter Verwendung einer Tangensfunktion angenähert wird.

2. Verfahren nach Anspruch 1, **dadurch gekennzeichnet, dass** die Tangensfunktion mindestens einen Parameter umfasst und dass der Wert des mindestens eine Parameters abhängig von den Messpunkten gewählt wird, derart, dass der extrapolierte Verlauf von den Messpunkten geringst möglich abweicht.

3. Verfahren nach einem der vorherigen Ansprüche, **dadurch gekennzeichnet, dass** für verschiedene Drehzahlen des Verdichters (5) unterschiedliche Verläufe des Massenstroms über dem Druckverhältnis extrapoliert werden.

4. Verfahren nach Anspruch 3, **dadurch gekennzeichnet, dass** die Tangensfunktion mindestens einen Parameter umfasst, der abhängig von der Drehzahl des Verdichters (5) gewählt wird.

5. Verfahren nach Anspruch 4, **dadurch gekennzeichnet, dass** das Argument der Tangensfunktion einen Parameter umfasst, der drehzahlabhängig gewählt wird.

**6.** Verfahren nach Anspruch 5, **dadurch gekennzeichnet, dass** für den drehzahlabhängigen Parameter ein funktionaler Zusammenhang, insbesondere eine Tangenshyperbolicus-Funktion, deren Argument die Drehzahl des Verdichters (5) umfasst, gewählt wird.

**7.** Verfahren nach Anspruch 6, **dadurch gekennzeichnet, dass** der funktionale Zusammenhang mindestens einen Parameter umfasst und dass der Wert des mindestens eine Parameters abhängig von den Messpunkten gewählt wird, derart, dass der extrapolierte Verlauf des Massenstroms über dem Druckverhältnis von den Messpunkten geringst möglich abweicht.

**8.** Verfahren nach einem der Ansprüche 3 bis 7, **dadurch gekennzeichnet, dass** ein Offset der Tangensfunktion drehzahlabhängig gewählt wird.

**9.** Verfahren nach Anspruch 8, **dadurch gekennzeichnet, dass** für den drehzahlabhängigen Offset ein funktionaler Zusammenhang, insbesondere eine Polynomfunktion, bei der die Drehzahl des Verdichters (5) quadratisch in den Offset eingeht, gewählt wird.

**10.** Verfahren nach Anspruch 8 oder 9, **dadurch gekennzeichnet, dass** der Offset mindestens einen Parameter umfasst und dass der Wert des mindestens eine Parameters abhängig von den Messpunkten gewählt wird, derart, dass der extrapolierte Verlauf des Massenstroms über dem Druckverhältnis von den Messpunkten geringst möglich abweicht.

**11.** Computerprogramm-Produkt mit Programmcode, der auf einem maschinenlesbaren Träger gespeichert ist, zur Durchführung des Verfahrens nach einem der Ansprüche 1 bis 10, wenn das Programm auf einem Computer ausgeführt wird.

**12.** Computerprogramm mit Programmcode zur Durchführung aller Schritte nach einem der Ansprüche 1 bis 10, wenn das Programm in einem Computer ausgeführt wird.

**13.** Steuer- und/oder Regeleinrichtung (15) zum Betreiben einer Brennkraftmaschine (1) mit einem Verdichter (5) in einer Luftzufuhr (10) der Brennkraftmaschine (1), mit Extrapolationsmitteln (20), die ausgehend von für verschiedene Druckverhältnisse über dem Verdichter (5) gemessenen Massenstromwerten durch den Verdichter (5) einen Verlauf des Massenstroms über dem Druckverhältnis extrapolieren, **dadurch gekennzeichnet, dass** die Extrapolationsmittel (20) den Verlauf des Massenstroms über dem Druckverhältnis unter Verwendung einer Tangensfunktion annähern.

Fig. 1

Fig. 2

Fig. 3

```
                    ┌─────────────┐
                    │    START    │
                    └──────┬──────┘
                           │
         ┌─────────────────┤
         │                 ▼
         │          ┌─────────────┐
         │          │             │──── 100
         │          └──────┬──────┘
         │                 │
         │                 ▼
         │          ┌─────────────┐
         │          │             │──── 105
         │          └──────┬──────┘
         │                 │
         │                 ▼
         │               ◇
         │   j         ◇   ◇
         └────────────◇     ◇──── 110
                       ◇   ◇
                         ◇
                         │ n
                         ▼
                  ┌─────────────┐
                  │             │──── 115
                  └──────┬──────┘
                         │
                         ▼
                  ┌─────────────┐
                  │             │──── 120
                  └──────┬──────┘
                         │
                         ▼
                  ┌─────────────┐
                  │             │──── 125
                  └──────┬──────┘
                         │
                         ▼
                  ┌─────────────┐
                  │     END     │
                  └─────────────┘
```

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **P. MORAAL ; I. KOLMANOVSKY.** Turbo charger modelling for automotive control applications. *Technical Report 1999-01-0908, SAE,* 1999